# EUROPEAN PATENT SPECIFICATION

(11) **EP 3 005 639 B1**
(45) Date of publication and mention of the grant of the patent: **09.08.2017**
(21) Application number: 13730502.5
(22) Date of filing: 04.06.2013
(51) Int. Cl.: H04L 29/06, G06F 21/32, H04L 9/32, G06K 9/00, G06Q 20/40, G07C 9/00

(54) **METHOD AND SYSTEM FOR VERIFYING THE IDENTITY OF A USER OF AN ONLINE SERVICE**
VERFAHREN UND SYSTEM ZUM PRÜFEN DER IDENTITÄT EINES BENUTZERS EINES ONLINE-DIENSTES
PROCÉDÉ ET SYSTÈME DE VÉRIFICATION DE L'IDENTITÉ D'UN UTILISATEUR D'UN SERVICE EN LIGNE

(43) Date of publication of application: 13.04.2016
(73) Proprietor: Smiley Owl Tech S.L., 20018 Donostia (San Sebastián) (ES)
(72) Inventor: VEA ORTE, Ricardo, E-20018 Donostia (San Sebastián) (ES); LABAYEN ESNAOLA, Mikel, E-20018 Donostia (San Sebastián) (ES); FLOREZ ESNAL, Julián, E-20009 Donostia (San Sebastián) (ES); MARCOS ORTEGO, Gorka, E-20009 Donostia (San Sebastián) (ES)
(74) Representative: Balder IP Law, S.L.
(86) International application number: PCT/EP2013/061521
(87) International publication number: WO 2014/194939

(56) References cited:
- US-A1- 2012 106 805
- US-B1- 7 991 388
- MOINI A ET AL: "Leveraging Biometrics for User Authentication in Online Learning: A Systems Perspective", IEEE SYSTEMS JOURNAL, IEEE, US, vol. 3, no. 4, 31 December 2009 (2009-12-31), pages 469-476, XP011327886, ISSN: 1932-8184, DOI: 10.1109/JSYST.2009.2038957

## Description

### TECHNICAL FIELD

The present invention relates to the field of secure access to Internet services and continuous verification during active sessions and, in particular, to methods and systems for avoiding identity theft in online services.

### STATE OF THE ART

Nowadays, identification of users in online services or web services is linked to a prior allocation of user and password. This information can, either with or without the user consent, set off identity theft, because the password can be shared, stolen or lost.

There are well-known applications which use facial recognition with different purposes. Examples of these applications are introduced next.

Some companies which deal with in-the-cloud applications use facial recognition techniques for management and labeling purposes. Examples of image recognition technologies are *Neven Vision* developed by Nevenengineering, Inc. and bought by Google, *face.com* bought by Apple or *Polar Rose* bought by Flickr and Facebook. There exist also free libraries, such as *Fotobounce,* for face recognition for management and labeling of photos. These web applications use facial recognition techniques as tools for automatic labeling of photos. Faces are identified and the pictures of the persons there appearing are labeled. These platforms usually offer added value services, such as recommending new contacts, linking common friends, images clustering, and so on.

Probably the broadest applicability of facial recognition techniques can be found in the security world. Both private and public security institutions use these techniques for identifying persons who might involve danger. A facial picture -taken by sensors located in buildings or even towns- is usually compared to a huge amount of pictures stored in data bases of potentially dangerous people. Products which provide such matching possibility are for example Congnitec, which provides photograph matching in large databases, Smartmatic, Face first, aware, Inc. or Morphotrak. They all offer offline standalone solutions.

Finally, there exist commercial solutions which aim for access control in physical areas or buildings. Examples of such solutions are Justlook or Synel's. These applications are installed in access terminals. By means of a data base owned by the same entity, they verify the identity of the person trying to go in, giving or denying such physical access. There are also systems based on facial recognition, such as KeyLemon, for verifying access to equipment. This solution controls the session establishment in a computer by means of facial recognition instead of requiring a user id and a password. It is installed locally at the computer and is executed offline. Similarly, the operative system Android 4.0 includes a facial recognition application in principle valid for unblocking mobile terminals.

United States Patent Application US2012/0106805A1 discloses a method for online identity verification.

United States patent US7991388B1 discloses a method and system for authenticating an account holder. The method and system involves the user photographing himself or herself for facial recognition verification, determination of geographical location and PIN typing.

However, none of the above mentioned applications deals with the problem of guaranteeing secure access to web services or continuous secure use of entire web services sessions. On the contrary, they are standalone programs which are executed locally in the terminal in which they are installed and only deal with the problem of guaranteeing secure access.

Assad Moini and Azad M. Madni discuss in "Leveraging Biometrics for User Authentication in Online Learning: A System Perspective", IEEE Systems Journal, Vol. 3, N° 4, December 2009, biometrics for remote authentication in online learning, including continuous authentication.

In sum, there is a need to solve in an efficient way, the problem of identity theft when accessing to web services or when using in a continuous way web services sessions.

### DESCRIPTION OF THE INVENTION

It is an object of the present invention to provide a method a system and a computer program product, for secure access to web services and secure continuous use of web services sessions as disclosed by the appended claims. Additional advantages and features of the invention will become apparent from the detail description that follows and will be particularly pointed out in the appended claims.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figure:

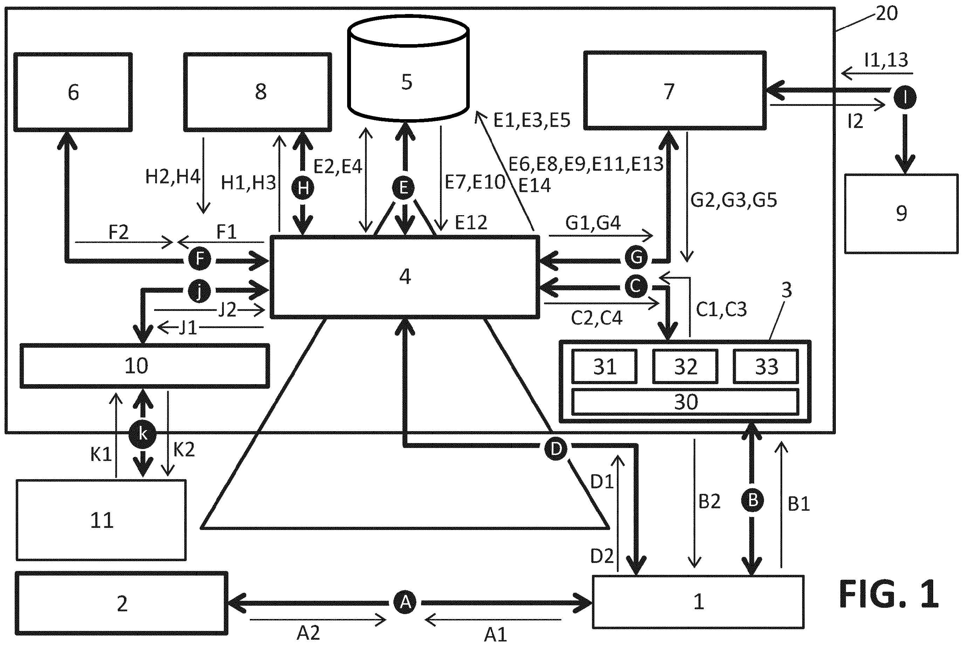

Figure 1 is a work flow of the method according to a possible embodiment of the present invention.

### DESCRIPTION OF A WAY OF CARRYING OUT THE INVENTION

The method and system of the invention represent a value-added service addressed to entities which offer on-line services and require user authentication. The method provides a solution to the identity theft in the on-line world since it provides continuous verification of the identity of persons who use a web service. Such verification is based on facial recognition and is achieved by repeatedly taking pictures of the user with a webcam and comparing those pictures with stored information of the subscribed user. The method is explained in detail next.

In the context of the present invention, the terms "picture", "image" and "photo" are interchangeably used. The same applies to the expressions "web service" and "online service", which equally refer to remote services the access of which requires an Internet connection.

Also in the context of the present invention, the term "continuous", referred to "continuous validation" or "continuous verification" of a session (of an online service), means that the identity of the user who is using said session is verified not only at the moment of giving access (to start the session) to the user, but also at several different moments during the life of the active session. This verification can be either periodical (with the periodicity which the service provider decides to impose) or random (with the advantage of surprising the user). In other words, "samples" (in this case, photos) of the user are taken at discrete moments during the session for continuously verifying his/her identity.

Figure 1 is a work flow of the method for verifying the identity of users of a web service. In figure 1, a user terminal 1, a web service 2 and a third-party or third-entity 20 are schematically shown. The third party 20 is the provider of the authentication service of the invention.

The user terminal 1 is the terminal used by a final user in order to access to an online service managed by a service provider. Non-limiting examples of user terminals 1 are personal computers, laptops, cellular or mobile terminals or any other terminal through which a data connection can be established. Any terminal can be used, provided that a data connection can be established. And any conventional browser within said terminal can be used. The inventive method does not impose any software requirements on this user terminal 1 which go beyond the minimal requirements for accessing the web service. This means that the user terminal 1 does not need any plug-in or software component installed. The user terminal 1 has a webcam which must be enabled.

Block 2 in figure 1 represents an online service (also referred to as web service) offered by a service provider. In particular, this block comprises both the server or servers and corresponding web site for providing an online service offered by a service provider. In order for a user to access from a user terminal 1 to the online service offered by the provider, the user needs to visit a web site 2 of the provider. The server contains, among other things, an order for executing a control application of the third party (preferably executed in the cloud) and information of the location from where user terminals 1 must download applications for user registration and ulterior verification via photo capture. Preferably, the location information is an IP address of a server 3 of a third 20 party which provides the verification and authentication service. Preferably, the servers and databases of this third party are located in the cloud.

In a particular embodiment, the service offered by the service provider is an educational service in which users follow an online course or training, for which their identity must be frequently checked if they (learners) want to obtain a degree. Non-limiting examples of other online services or web services that can also be provided by the service provider are, among others: e-payment, online access to bank accounts, online games and monitorization.

The communication between the user (at user terminal 1) and the web service provider (via web site 2) in order to receive or use the online service is as follows (stage A in figure 1): A final user (for example, a student who wants to follow an online course) visits (arrow A1) using a user terminal 1 a web page from which the provider offers its online service 2. This connection is established via any conventional data communications protocol. In a preferred embodiment, this communication is established using the Internet protocol. The user then downloads (arrow A2) the web page and/or online service from the provider's servers 2. In a preferred embodiment, the user downloads (A2) a web page which acts as user interface. In other words, the web page of the service is downloaded and through interaction with said web page, a site linked to the web page offers its online service (for example, files serving, online exercises, forums...).

The service provider has integrated within its server 2: (a) information (e.g. an IP address) for downloading third-party applications and (b) an order to execute a control application 30 from the applications server 3 of the third party 20 (or rather, from the cloud, wherein the applications server 3 keeps its information). The service provider also has data which unequivocally identify the user who is connected to a web service, because it obtains this information when the user connects to the online service through a web page (which requires to log in with user ID and password).

Together with the downloaded web page (arrow A2), the user terminal 1 receives (downloads) that order for executing said control application 30 belonging to an applications module or applications server 3. Within this order there are also some data which unequivocally identify the user who has logged in the online service 2 (for example, a user ID). The user terminal 1 also receives (arrow A2) together with or within said order of execution an IP address of the applications module 3 of the third-party 20. The control application 30 is preferably kept in the cloud. This control application 30 controls the downloading of additional third-party applications (that is to say, applications offered by a third party 20) of an applications module or applications server 3 (also referred to as authentication server 3), which are the key to user registration and ulterior (either periodically or non-periodically) verification of the user. Preferably those applications are kept in the cloud. In other words, the user terminal 1 receives (arrow A2) the IP address at which it can execute a remote, control application 30 and at which it can download the third-party applications, and an order for executing the remote, control application 30, and data which unequivocally identify the user who has logged in the online service 2.

Thus, each user who accesses the online service 2 receives (A2) the order of executing that control application, the information (IP address) to reach the applications server 3 and identification of the user of the web service 2. It can happen, however, that the service provider might not be interested, for any reason, in controlling all the users of its online service. It is therefore the service provider which authorizes or denies authorization to the users for downloading those additional applications from the third party (server 3). If the service provider decides not to authorize a user to use the verification service provided by the third party 20, the online session with the online service 2 runs in a conventional way (that is to say, with no continuous verification of the identity of the user).

The *intelligence* of the third party 20 mainly lies on a management module 4, in charge of, among other tasks, managing the access of images (input and output) to a data base 5; managing the workflow between automatic and manual facial recognition modules, based on the precision of the automatic facial recognition delivered results; and managing the delivery of manually validated images to a facial trainer for continuously updating the facial models of the users.

The third party 20 also has a data base 5 for storing all the captured images, associated metadata and biometrical models of user faces.

Once the user terminal 1 has received (arrow A2) the execution order for executing a control application 30, the user terminal 1 orders (arrow B1) the execution of a control application 30 which belongs to the server 3 of the third party and preferably is kept in the cloud. A control application 30 is then executed preferably in the cloud. It is then checked by this control application 30 whether the user at user terminal 1 trying to access to a session (of the web service) controlled by facial authentication provided by the third party 20, is allowed to access such a session or not. This application 30 checks whether the user is authorized by the service provider or not. As already explained, the service provider might not be interested in controlling all the users of its online service. Authorization for downloading the verification applications is thus denied to the non-authorized users. Finally, if a user is authorized, application 30 checks whether he/she is already registered or not.

Next it is explained how it is checked whether a user is authorized to use a facial verification service or not. Once the control application 30 is executed, the applications server 3 is provided with some data unambiguously identifying the user trying to establish the session. In a preferred embodiment, those data are a user ID. This data have been previously obtained (arrow A2) from the service provider, since those data were included in the execution order sent to the user terminal 1 (arrow A2). The applications server (authentication server) 3 then makes a petition (arrow C1) to a management module 4 owned by the third party 20, which checks (arrow E1) in a data base 5 if the data unambiguously identifying the user (preferably a user ID) correspond to a user who is authorized for using a facial recognition controlled session or not. If the user is not allowed, the applications server 3 is informed by the management module 4 (arrow C2) and the execution of the application 30 is interrupted and the user terminal 1 is informed (arrow B2) of this interruption. The additional applications (31, 32, 33) are not downloaded. The communication between user (at user terminal 1) and web service/servers 2 follows as a conventional client/server connection (without using the method for continuous verification of identity). As already explained, it is the online service provider who authorizes (or not) users in the third party service for identity verification.

Only when a user is authorized by the service provider of the online service 2, a session controlled by the third party 20 starts (this starting being controlled by control application 30). In this controlled session photos are taken and the identity of the persons appearing in those photos is verified by means of facial authentication algorithms, as explained next.

The applications server (authentication server) 3 keeps at least three additional applications: a registration application 31, a pictures-taking application 33 and an application 32 configured to define the preferences in interaction options between the pictures-taking application 33 and the user terminal 1. The third-party applications are compatible with any browser. It is the control application 30 which orders the downloading of these applications 31 32 33 onto the user terminal 1. The user needs these applications because they enable the user terminal 1 to establish a connection with a facial recognition controlled session offered by the third party 20. The third-party applications are compatible with any browser. The registration application 31 is configured to take at least one first image which is used for first training (to have a reference of the actual appearance of the user). The pictures-taking application 33 is an application for accessing to the webcam of the user terminal 1 for identity verification of the user. It asks the webcam to take a picture and send it to a management module 4. The preferences application 32 is configured to allow a user to define his/her preferences with respect to the pictures-taking application 33. These applications 31 32 33 enable the establishment of a facial recognition controlled session. As already explained, prior to establishing this controlled session, control application 30 checks, through management module 4 (which in turn checks in the data base 5), whether the user who has logged in the online service 2 is enabled to use a facial recognition controlled session. Only if the user is authorized to use the facial recognition controlled session does the control application 30 order the download of those applications 31 32 33 (or the one required at a certain moment).

The three applications 31 32 33 are not downloaded at the user terminal 1 at the same time. Control application 30 controls which application 31 32 33 must be downloaded (arrow B2) into user terminal 1. For example, if a user is already registered, registration application 31 does not need to be downloaded (this application 31 is downloaded only the first time a user accesses to this verification service provided by the third party 20). The pictures-taking application 33 is downloaded in every session. The preferences application 32 is preferably downloaded after a user has been registered. Later on, this application 32 is preferably only downloaded on demand, when the user clicks in a tab to change the different options. On the other hand, the applications are executed locally, but nothing is installed (they are executed without being installed). They are portable applications. The applications are preferably stored in the cloud.

If the management module or management unit 4 verifies (arrow E1) that the user is allowed (authorized by the service provider of the online service) to use the facial recognition controlled session, and the user terminal 1 has a webcam which is activated, the applications module 3 asks (arrow C3) the management module 4 whether the user is registered or not in the system (that is to say, if the system has already a picture (a face) of the user in its data base 5). After checking this information in data base 5 (arrow E2), the management module 4 informs (arrow C4) the applications module 3. All this information work flow is controlled by control application 30. According to the results, the work flow continues as follows:

### Case 1: The user is not registered vet

If the user is not registered yet with the third-party 20 in charge of verifying that secure access to the web service 2 occurs, the control application 30 gives an order for downloading (arrow B2) at user terminal 1 a registration application 31. This internal registration application 31 is based on Flex technology of Adobe and is a proprietary development of the patent inventors.

Next, if a user is authorized by the service provider to use the verification service offered by the third party 20, registration application 31 checks whether the user has, at its user terminal 1, a webcam. If the user does not have a webcam, then the execution of the application 30 is interrupted and registration application 31 removed from user terminal 1 as if the user was not authorized to user the verification service provided by the third party. The additional applications (32, 33) are not downloaded. In that case, the online session with the online service 2 runs in a conventional way (that is to say, with no continuous verification of the identity of the user

If the user terminal 1 has a webcam, every time a session is initiated, the user is preferably asked to activate the webcam. If the user refuses to activate the webcam, the registration application 31 is removed and the execution of control application 30 (preferably in the cloud) is interrupted as if the user was not authorized to user the verification service provided by the third party. The online session with the online service 2 runs in a conventional way (that is to say, with no continuous verification of the identity of the user).

This registration application 31 allows accessing to the webcam of the user terminal 1. The webcam is then ordered to take at least one image (in theory of the user) and, after the user accepts the terms and conditions of use, the at least one image is sent together with (associated to) those data unambiguously identifying the user trying to establish the session to the management module 4 (arrow D1). Those data unambiguously identifying the user are preferably a user ID. In a preferred embodiment, the webcam takes and sends more than one image. In a more preferred way, it takes and sends three images. As already explained, the data unambiguously identifying the user which is using the session (preferably a user ID) is provided to user terminal 1 (arrow A2) within the order to execute the control application 30. This way the control application 30 knows (through user terminal 1) those data unambiguously identifying the user which is using the session (preferably a user ID). The user terminal 1 sends them (arrow D1) to the management module 4 together with the photo and metadata. As already mentioned, these data (preferably user ID) correspond to the user who has logged on the online service 2 with his/her user identifier and password. Those data are the data of the user who should appear in the photos (that is to say, if no identity theft occurs).

Once registered, that is to say, once the third party 20 has at least one picture (face) of the user of the web service 2, the user can change his/her registration photos whenever he/she wants, but he/she is not obliged thereto. It is recalled that a user can be authorized by the service provider of the online service 2 to use the facial verification service provided by the third party 20, but not registered yet to that verification service, because he/she has not connected yet for the first time to the online service 2 offered by the service provider.

The at least one image is stored (arrow E3) in the data base 5 with its (or their) associated metadata (data unambiguously identifying the user (preferably user ID) and date/time of capture). Afterwards, the management module 4 collects the image(s) (arrow E4) and transmits (H1) it/them to a facial training module 8. The facial trainer module 8 comprises an automatic facial recognition training algorithm, which is out of the scope of the present invention. It creates a biometrical model of each registered user (in particular, of his/her face) from the registration images. The facial trainer module 8 is also capable of updating the biometrical models from more recently received images of the users. The facial trainer module 8 analyzes the image(s) and creates a biometrical model of the user from the registered image(s). If the facial trainer module 8 detects that in the photo (s) taken at the registration process (controlled by application 31) there are more than one faces, the registration is invalid and the webcam of the user terminal 1 is ordered to take new photos until one photo allows for correct registration (until a photo comprises one single face). The facial trainer module 8 sends (arrow H2) the management module 4 the created biometrical model, which is then taken (arrow E5) to the data base 5 and stored there, finishing the registration process.

Once the registration process is fulfilled, the applications module 3 loads at the user terminal 1 an internal application 32 configured to define the preferences in interaction options between the pictures-taking application 33 and the user terminal 1. Once the user defines its options, they are stored in the data base 5 through management module 4 (arrow D2 from user terminal 1 to management module 4 and arrow E14 from management module 4 to data base 5).

Finally, the applications module 3 loads an internal application 33 for taking photos during all coming sessions. This application 33 can either take photos randomly or periodically. Besides it can either inform the user that a photo is going to be taken or not. For example, it can inform the user with a blinking light or a sound. These are parameters defined in the options between the internal application 32 and the user terminal 1.

### Case 2: The user is already registered

If the user is already registered, that is to say, the process described in case 1 has already occurred once, the control application 30 gives an order for downloading (arrow B2) at user terminal 1 an application 33 configured to take photos during all coming sessions. In a preferred embodiment, this application 33 is configured to take photos randomly. This application 33 is based on Flex technology of Adobe and it is a proprietary development of the patent inventors.

Next, if a user is authorized by the service provider to use the verification service offered by the third party 20, registration application 33 checks whether the user has, at its user terminal 1, a webcam. If the user does not have a webcam, then the execution of the application 30 is interrupted and application 33 removed from user terminal 1 as if the user was not authorized to user the verification service provided by the third party. The additional application (32) is not downloaded. In that case, the online session with the online service 2 runs in a conventional way (that is to say, with no continuous verification of the identity of the user

If the user terminal 1 has a webcam, every time a session is initiated, the user is preferably asked to activate the webcam. If the user refuses to activate the webcam, this application 33 is removed and the execution of control application 30 (preferably in the cloud) is interrupted as if the user was not authorized to user the verification service provided by the third party. The online session with the online service 2 runs in a conventional way (that is to say, with no continuous verification of the identity of the user).

This application 33 allows accessing to the webcam of the user terminal 1. Either periodically or every now and then (that is to say, randomly around a mean time) (this second option being the preferred one), the webcam is ordered by the application 33 to take one picture (in theory of the user). The application 33 then sends the picture together with its associated metadata (data unambiguously identifying the user which is using the session (preferably a user ID) and date/time of capture) to the management module 4 (arrow D2). As already explained, the data unambiguously identifying the user which is using the session (preferably a user ID) is provided (arrow A2) to the user terminal 1 within the order to execute the control application 30. This way the control application 30 knows (through user terminal 1) those data unambiguously identifying the user which is using the session (preferably a user ID). These data (preferably user ID) correspond to the user who has logged on the online service 2 with his/her user identifier and password. Those data are the data of the user who should appear in the photos (that is to say, if no identity theft occurs). The user terminal 1 sends them (arrow D2) to the management module 4 together with the photo and metadata. The images which are sent randomly or periodically to the management module 4 are then stored (arrow E6) in the data base 5 with the associated metadata (data unambiguously identifying the user (preferably user ID) and date/time of capture).

Afterwards, the management module 4 collects the stored image (arrow E7) and transmits (F1) it to an automatic facial recognition module 6. This module 6 comprises a conventional algorithm for automatic facial recognition, which is out of the scope of the present invention. The image and its biometrical model (which is extracted from the image at said recognition module 6) are analyzed by the automatic recognition system 6. Prior to comparing the extracted biometrical model to a reference one, the automatic facial recognition module 6 detects if the photo comprises at least one face or not and, if there is at least one, how many of them there are. Once one or more faces are detected, it proceeds to extract the facial characteristics of each face to build corresponding biometrical models (it builds one model for each detected face in an image). The automatic recognition system 6 collects from the data base 5 a reference biometrical model of that user. The biometrical model under analysis is thus compared to the reference biometrical model which the system keeps for that user. The automatic recognition system 7 delivers (arrow F2) a result of the analysis (comparison of descriptors or facial parameters of the image with stored reference descriptors or parameter model of the user, stored in the data base 5) towards the management module 4 which then sends (arrow E8) the result to the data base 5 where it is stored. The result is a variable whose value gives all the information necessary to qualify the result. The management module 4 has established some ranks with possible values of this variable. According to these ranks, the management module 4 knows if no person appears in a photo, if the right person has been detected, if a person who is not the right person has been detected, if there are more than one person in the photo, and so on. In a particular embodiment, a correctly identified user gives as a result a variable with a positive integer, wherein the closer to 0 is the value of the result variable, the more reliability offers the system In particular, the result is identified as either having 100% precision (total guarantee of correct identification of the user) or non-having 100% precision (uncertainty in the identification of the user) Depending on the delivered result, the work flow continues as follows:
a) If the delivered result belongs to the 100% precision group, the delivered result is considered valid and the management module 4 adds to the result a flag indicating that no manual validation is needed. The result is then stored in the data base 5 (arrow E9). After this, the system goes to stand-by state, waiting for another image to analyze.
b) If the delivered result belongs to the uncertainty results group, the management module 4 adds to the result a flag indicating that manual validation is needed and stores it (arrow E9) in the data base 5. Two possibilities arise at this moment:
   b1) If the image is an image which requires real-time validation (which is something which depends mainly on the type of web service 2 provided by the service provider), then the management module 4 transmits (arrow G1) the image to a manual recognition module 7. This is explained in detail later.
   b2) Otherwise (if the image does not require real-time validation), the system goes to stand-by state, waiting for another image to analyze.

As explained in relation to the variable which provides the result of the facial comparison, the system is capable of determining:
- If the image is valid for analysis (that is to say, it is capable of excluding black images)
- If there is someone in front of the webcam or not
- If there is someone, how many persons there are
- If there are more than one person, if one of them is the person who should be in front of the screen
- If there is only one person in the image, if this person is the person who should be.

This determination is out of the scope of the present invention.

Next the case in which an image requires manual validation at a manual recognition module 7 is described. The manual recognition module 7 is a web application for manual face recognition which can be used by the staff of the third party. Thus the staff members can validate the users of the web service and cluster the images. It also checks, through management module 4, if the staff is authorized to access to this information.

The management module 4 collects (arrow E10) from the data base 5 and sends (arrow G1) to the manual recognition module 7 the following in respect of a user: manual validation pending images, images taken at the moment of user registration and at least one last verified image. It can additionally send more than one already verified images.

The manual recognition module 7 has authorized staff who need to be authorized before starting validating manually. For example, they are registered with ID and password in the data base 5 and they must authenticate themselves in a manual validation application located at the manual recognition module 7 and managed by the management module 4 which collects authentication data from the data base 5. All served images to the staff are marked using watermarking techniques. This mark is created according to the staff member in order to identify which person (staff member) downloads which images from the data base 5. Undue use of the pictures is thus prevented.

The manual authentication of pictures can be made either in real time or in non-real time (preferably within a limited period of time since the capture of the image). In this last case, tasks are distributed according to the premises of a staff manager.
a) If image verification must be done in real time: The image is analyzed by the automatic recognition module 6 and the management module 4 (which is responsible of determining whether manual verification is needed or not) stores the delivered result in the data base 5. After this, the management module 4 sends the image (arrow G1) to the manual recognition module 7. This module 7 activates an instant alert in a staff terminal 9 (preferably in a call center to guarantee the real time response).The staff terminal 9 is a terminal used by the staff to access to the manual validation web application 7 (module 7). The staff member then delivers a result of a visual validation of the image in real time. The result of the manual verification is stored in the data base 5 by the management module 4. In a preferred embodiment, more than one staff members analyses the image in order to guarantee correct identification of the user.
b) If image verification does not need to be done in real time: The images and results of the automatic recognition are stored in the data base 5. The staff responsible for manually verifying the images can do it at any time. When the staff accesses (arrow I1) through staff terminal 9 to an application for manual recognition located at the manual recognition module 7, this module 7 requests (arrow G3) the management module 4 a set of manual validation pending images. The management module 4 collects (arrow E10) the images from the data base 5 and inserts corresponding water marks in them. The management module 4 serves (arrow G4) this information to the staff terminal 9 (arrow I2) using the application for manual recognition.
   Using the manual recognition application 7, the staff delivers the manual verification results (arrows I3 G5) to the management module 4 which are stored (arrow E11) in the data base 5. To ensure that all staff members are doing properly their work, the management module 4 serves each image to different staff members. This way it compares the delivered results, which must be same. If the results are different, the management module 4, responsible of this check, continues serving images until they are validated correctly. It further records in the data base 5 counters which count the number of times an image has been evaluated and by whom. For each staff member and each validation process, the management module 4 updates in the data base 5 a corresponding counter of served images and manually validated images.

Once an image has been (preferably manually, but alternatively only automatically) verified as correct (that is to say, it has been verified that an image corresponds to the user who was originally registered at the web service 2), the management module 4 takes (arrow E12) the verified image from the data base 5 to the face training module 8 (arrow H3). At this face training module 8 a new biometrical model of the registered user is created, based on the recent, verified user images, thus updating the biometrical model created when the user first registered. Afterwards, the resultant biometrical model is stored (arrow H4, E13) in the data base 5 (through management module 4).

The third party 20 presents the verification results as required by the service provider 2. The results are organized by a results presentation module 10 owned by the third party 20. Module 10 transforms the numeric values stored in the data base 5 in graphical representations and tables. The results presentation module 10 of the third party 20 sends the results from the management module 4 to a terminal 11 of the service provider. This terminal 11 is used by the service provider to access to the results presentation web application. This is done either on demand of periodically. In a preferred embodiment, the third party 20 automatically generates periodical reports. These reports are in particular generated by module 10, which takes the required information from the data base 5 through the management module 4. Module 10, preferably either periodically or in response to an alarm which triggers when a certain behavior defined by the online service provider fails, periodically sends the reports to the online service provider. In a particular embodiment, they are sent via email. The access to the results is restricted to authorized providers. For this reason the service provider 2 must be identified, for example by means of ID and password, which are verified in the data base 5 in a similar way as staff members in the manual verification stage. Once authorized via the results presentation module 10, the service provider at terminal 11 requests (arrow K1) the results to the presentation module 10 which in turn collects them (arrow J1) from the management module 4. This collects them from the data base 5 and sends them to the presentation module 10, which delivers the results to the terminal 11 (arrow J2, K2). Preferably it creates graphics, charts and tables which are served for their visualization to the terminal 11 as a dynamic web page.

In a preferred embodiment, all the servers and data bases of the third party 20 are in the cloud. Alternatively, the servers and data bases are local servers and databases.

All communications between the final user (at user terminal 1) and the third party (arrows B and D), between the staff and the third party (arrows I), between the service provider and the third party (arrows K) and between the final user (at user terminal 1) and the service provider (arrows A) are preferably TCP/IP, http and POST protocols.

The information transmission in these communications channels is encoded. All the rest communications are intra server, physical cable. All the access petitions from different terminals must be accompanied by corresponding (user, staff or provider) ID for authorization. All the images, both in internal and external communications, are always accompanied by an identification of the user who should appear in the image.

The system thus assures valid results with 100% precision, thanks to the combination of automatic and manual verification modules.

Besides, the system works 24h a day, 365 days a year. Furthermore, it is a multilingual system and accessible from any part of the world, provided access to the Internet is available.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A method for verifying the identity of a user of an online service, **characterized by** the steps of:
- when a user terminal (1) is connected (A1) to an online service (2) by means of a communication over an Internet protocol, sending (A2) from a server of said online service (2) to said user terminal (1) an IP address of an authentication server (3);
- connecting (B1) said user terminal (1) to said IP address and downloading (B2) from said authentication server (3) at least one application (33), said at least one application (33) being for taking photos with the webcam of the user terminal (1);
- taking a photo with the webcam of the user terminal (1), said taking the photo being controlled by said application (33);
- sending (D2) said photo and associated metadata to a management unit (4), said metadata comprising at least a user ID of the user using said user terminal (1) and the time of capture of said photo;
- storing (E6) said photo and associated metadata in a data base (5);
- at an automatic facial recognition module (6), automatically extracting one set of biometrical parameters per each face which appears in said photo;
- at said automatic facial recognition module (6), comparing said set or sets of biometrical parameters extracted from said photo with a reference biometrical model of the user to which said user ID belongs, said reference biometrical model being stored in said data base (5);
- if the result of said comparison unequivocally matches the person in the photo with the user to which said user ID belongs, said management unit (4) adds to the result a flag indicating that no manual validation is needed;
- otherwise, if the result of said comparison does not unequivocally match the person in the photo with the user to which said user ID belongs, the management unit (4) adds to the result a flag indicating that manual validation is needed; then: either informing the online service provider (2) of this or sending (G1) said photo to a manual recognition unit (7) for manual validation of the photo;
- repeating the step of taking a photo with the webcam of the user terminal (1) and the subsequent steps, thus continuously verifying the identity of the user connected to the online service (2) through said user terminal (1).

2. The method of claim 1, wherein said step of repeating the taking a photo with the webcam of the user terminal (1) is done randomly.

3. The method of claim 1, wherein said step of repeating the taking a photo with the webcam of the user terminal (1) is done periodically.

4. The method of any preceding claim, wherein the user ID of the user using said user terminal (1) which is sent (D2) to a management unit (4) together with said photo, is provided by the user terminal (1) which in turn has obtained it (A2) from said online service provider.

5. The method of any preceding claim, wherein if the user has not been registered as a user of said online service (2) yet, prior to downloading from said authentication server (3) an application (33) for taking photos with the webcam of the user terminal (1):
- an application (31) for registration at a facial recognition controlled session is downloaded from said authentication server (3) to said user terminal (1), said registration application (31) being configured to take at least one first photo with the webcam of the user terminal (1);
- at least one first photo is taken with the webcam of the user terminal (1), said taking the photo being controlled by said registration application (31);
- said at least one first photo and associated metadata are sent (D1) to the management unit (4), said metadata being at least a user ID of the user using said user terminal (1) and the time of capture of said at least one first photo;
- storing (E3) said at least one first photo and associated metadata in said data base (5);
- for said at least one first photo, creating (8) by an automatic facial recognition training algorithm a biometrical model of the face comprised in said photo;
- storing (E5) the created biometrical model in said data base (5), finishing the registration process.

6. The method of claim 5, further comprising the step of, once a photo has been verified as belonging to the user who originally registered at the online service (2), creating an updated biometrical model of the registered user from said verified photo and storing (H4, E13) said updated biometrical model in said data base (5).

7. The method of either claim 5 or 6, wherein, at said step of creating (8) by an automatic facial recognition training algorithm a biometrical model of the face comprised in said photo, if it is detected that there are more than one faces in the photo, the registration is invalid and the webcam of the user terminal (1) is ordered to take new photos until one photo comprises one single face.

8. The method of any preceding claim, further comprising the step of downloading (B2) from said authentication server (3) an application (32) for defining some preferences in the interaction between the application for taking photos (33) and the user terminal (1).

9. The method of any preceding claim, wherein said application (31, 32, 33) downloaded at said user terminal (1) from said authentication server (3) is a portable application executed at said user terminal (1) without being installed therein.

10. The method of any preceding claim, wherein, if said photo is taken (G1) to a manual recognition unit (7) for manual validation of the photo, said manual recognition unit (7) is accessed by a human validator from a remote terminal (9).

11. A system for verifying the identity of a user of an online service, **characterized in that** it comprises:
- an authentication server (3) configured for providing a user terminal (1) through which a user can be connected to an online service (2), with at least one application (33), said at least one application (33) being an application for taking photos with a webcam of the user terminal (1);
- a management unit (4) configured for receiving a photo taken by said webcam at the request of said application (33) and associated metadata, said metadata comprising at least a user ID of the user using said user terminal (1) and the time of capture of said photo;
- a data base (5) for storing said photo and associated metadata and a collection of photos and corresponding biometrical models of registered users of said online service (2);
- an automatic recognition unit (6) configured for extracting one set of biometrical parameters per each face which appears in said photo and for comparing said set or sets of biometrical parameters extracted from said photo with a reference biometrical model of the user to which said user ID belongs, said reference biometrical model being stored in said data base (5);
wherein said management unit (4) is also configured for, if the result of said comparison unequivocally matches the person in the photo with the user to which said user ID belongs, adding to the result a flag indicating that no manual validation is needed, and for, if the result of said comparison does not unequivocally match the person in the photo with the user to which said user ID belongs, adding to the result a flag indicating that manual validation is needed;
- a manual validation unit (7) for validating the photo in the event the automatic comparison is not capable of unequivocally matching the person in the photo with an authorized person.

12. The system of claim 11, wherein said authentication server (3), said management unit (4), said data base (5), said automatic recognition unit (6) and said manual recognition unit (7) are in the cloud.

13. The system of either claim 11 or 12, further comprising a facial trainer module (8) comprising an automatic facial recognition training algorithm and configured for creating a biometrical model of each registered user from at least one photo.

14. The system of claim 13, wherein said facial trainer module (8) is configured for updating the biometrical models from more recently received photos of the users.

15. Computer program product comprising computer program instructions/code for performing the method according to any of claims 1 to 10.

## Patentansprüche

1. Verfahren zum Prüfen der Identität eines Benutzers eines Online-Dienstes, **gekennzeichnet durch** die Schritte:
- wenn ein Benutzerendgerät (1) mit einem Online-Dienst (2) verbunden wird (A1) mittels einer Kommunikation über ein Internetprotokoll, Senden (A2) einer IP-Adresse eines Berechtigungsservers (3) von einem Server des Online-Dienstes (2) zu dem Benutzerendgerät (1);
- Verbinden (B1) des Benutzerendgeräts (1) mit der IP-Adresse und Herunterladen (B2) zumindest einer Anwendung (33) von dem Berechtigungsserver (3), wobei die zumindest eine Anwendung (33) zum Aufnehmen von Fotos mit der Webcam des Benutzerendgeräts (1) vorgesehen ist;
- Aufnehmen eines Fotos mit der Webcam des Benutzerendgeräts (1), wobei das Aufnehmen des Fotos durch die Anwendung (33) gesteuert wird;
- Senden (D2) des Fotos und assoziierter Metadaten zu einer Managementeinheit (4), wobei die Metadaten zumindest eine Benutzer-ID (Benutzerkennung) des das Benutzerendgerät (1) benutzenden Benutzers und die Zeit der Aufnahme des Fotos aufweisen;
- Speichern (E6) des Fotos und assoziierter Metadaten in einer Datenbank (5);
- automatisches Herausziehen eines Satzes von biometrischen Parametern für jedes Gesicht, das in dem Foto erscheint, in einem automatischen Gesichtserkennungsmodul (6);
- Vergleichen des Satzes von Sätzen von biometrischen Parametern, die aus dem Foto herausgezogen wurden, mit einem biometrischen Bezugsmodell des Benutzers, zu dem die Benutzer-ID gehört, in dem automatischen Gesichtserkennungsmodul (6), wobei das biometrische Bezugsmodell in der Datenbank (5) gespeichert ist;
- wenn das Ergebnis des Vergleichs eindeutig die Übereinstimmung der Person in dem Foto mit dem Benutzer, zu dem die Benutzer-ID gehört, ergibt, fügt die Managementeinheit (4) ein Kennzeichen, das anzeigt, das keine manuelle Gültigerklärung benötigt wird, zu dem Ergebnis hinzu;
- anderenfalls, wenn das Ergebnis des Vergleichs nicht eindeutig die Übereinstimmung der Person in dem Foto mit dem Benutzer, zu dem die Benutzer-ID gehört, ergibt, fügt die Managementeinheit (4) ein Kennzeichen, das anzeigt, dass eine manuelle Gültigerklärung benötigt wird, zu dem Ergebnis hinzu; dann: entweder Informieren des Online-Dienstproviders (2) hierüber oder Senden (G1) des Fotos zu einer manuellen Erkennungseinheit (7) für manuelle Gültigerklärung des Fotos;
- Wiederholen des Schritts des Aufnehmens eines Fotos mit der Webcam des Benutzerendgeräts (1) und der nachfolgenden Schritte, wodurch kontinuierlich die Identität des durch das Benutzerendgerät (1) mit dem Online-Dienst (2) verbundenen Benutzers geprüft wird.

2. Verfahren nach Anspruch 1, bei dem der Schritt des Wiederholens des Aufnehmens eines Fotos mit der Webcam des Benutzerendgeräts (1) zufällig erfolgt.

3. Verfahren nach Anspruch 1, bei dem der Schritt des Wiederholens des Aufnehmens eines Fotos mit der Webcam des Benutzerendgeräts (1) periodisch erfolgt.

4. Verfahren nach einem vorhergehenden Ansprüche, bei dem die Benutzer-ID des das Benutzerendgerät (1) benutzenden Benutzers, die zusammen mit dem Foto zu einer Managementeinheit (4) gesendet wird (D2), durch das Benutzerendgerät (1) bereitgestellt wird, das sie seinerseits von dem Online-Dienstprovider erhalten hat (A2).

5. Verfahren nach einem der vorhergehenden Ansprüche, bei dem, wenn der Benutzer noch nicht als ein Benutzer des Online-Dienstes (2) registriert wurde, vor dem Herunterladen einer Anwendung (33) zum Aufnehmen von Fotos mit der Webcam des Benutzerendgeräts (1) von dem Berechtigungsserver (3):
- eine Anwendung (31) zur Registrierung bei einer durch Gesichtserkennung gesteuerten Session wird von dem Berechtigungsserver (3) zu dem Benutzerendgerät (1) heruntergeladen, wobei die Registrierungsanwendung (31) konfiguriert ist zum Aufnehmen von zumindest einem ersten Foto mit der Webcam des Benutzerendgeräts (1);
- zumindest ein erstes Foto wird mit der Webcam des Benutzerendgeräts (1) aufgenommen, wobei die Aufnahme des Fotos durch die Registrierungsanwendung (31) gesteuert wird;
- das zumindest eine erste Foto und assoziierte Metadaten werden zu der Managementeinheit (4) gesendet (D1), wobei die Metadaten zumindest eine Benutzer-ID des das Benutzerendgerät (1) benutzenden Benutzers und die Zeit der Aufnahme des zumindest einen ersten Fotos sind;
- Speichern (E3) des zumindest einen ersten Fotos und der assoziierten Metadaten in der Datenbank (5);
- Schaffen (8) durch einen automatischen Gesichtserkennungs-Trainingsalgorithmus für das zumindest eine erste Foto eines biometrischen Modells des in dem Foto enthaltenen Gesichts;
- Speichern (E5) des geschaffenen biometrischen Modells in der Datenbank (5), und Beenden des Registrierungsprozesses.

6. Verfahren nach Anspruch 5, weiterhin aufweisend den Schritt des, nachdem ein Foto als zu dem Benutzer, der ursprünglich bei dem Online-Service (2) registriert wurde, gehörend verifiziert wurde, Schaffens eines aktualisierten biometrischen Modells des registrierten Benutzers anhand des verifizierten Fotos, und Speichern (H4, E13) des aktualisierten biometrischen Modells in der Datenbank (5).

7. Verfahren nach Anspruch 5 oder 6, bei dem in dem Schritt des Schaffens (8) eines biometrischen Modells des in dem Foto enthaltenen Gesichts durch einen automatischen Gesichtserkennungs-Trainingsalgorithmus, wenn erfasst wird, dass mehr als ein Gesicht in dem Foto enthalten sind, die Registrierung ungültig ist und die Webcam des Benutzerendgeräts (1) angewiesen wird, neue Fotos aufzunehmen, bis ein Foto ein einziges Gesicht aufweist.

8. Verfahren nach einem der vorhergehenden Ansprüche, weiterhin aufweisend den Schritt des Herunterladens (B2) einer Anwendung (32) zum Definieren einiger Bevorzugungen in dem Zusammenwirken zwischen der Anwendung zum Aufnehmen von Fotos (33) und dem Benutzerendgerät (1) von dem Berechtigungsserver (3).

9. Verfahren nach einem der vorhergehenden Ansprüche, bei dem die von dem Berechtigungsserver (3) bei dem Benutzerendgerät (1) heruntergeladene Anwendung (31, 32, 33) eine transportierbare Anwendung ist, die bei dem Benutzerendgerät (1) ausgeführt wird, ohne in diesem installiert zu sein.

10. Verfahren nach einem der vorhergehenden Ansprüche, bei dem, wenn das Foto zu einer manuellen Erkennungseinheit (7) für eine manuelle Gültigerklärung des Fotos genommen wird (G1), ein Zugriff zu der manuellen Erkennungseinheit (7) durch einen menschlichen Gültigerklärer von einem entfernten Endgerät (9) aus erfolgt.

11. System zum Prüfen der Identität eines Benutzers eines Online-Dienstes, **dadurch gekennzeichnet, dass** es aufweist:
- einen Berechtigungsserver (3), der konfiguriert ist zum Beliefern eines Benutzerendgeräts (1), durch das ein Benutzer mit einem Online-Dienst (2) verbunden werden kann, mit zumindest einer Anwendung (33), wobei die zumindest eine Anwendung (33) eine Anwendung zum Aufnehmen von Fotos mit einer Webcam des Benutzerendgeräts (1) ist;
- eine Managementeinheit (4), die konfiguriert ist zum Empfangen eines durch die Webcam auf Anforderung der Anwendung (33) aufgenommenen Fotos und assoziierter Metadaten, welche Metadaten zumindest eine Benutzer-ID des das Benutzerendgerät (1) benutzenden Benutzers und die Zeit der Aufnahme des Fotos aufweisen;
- eine Datenbank (5) zum Speichern des Fotos und assoziierter Metadaten sowie einer Sammlung von Fotos und entsprechender biometrischer Modelle von registrierten Benutzern des Online-Services (2);
- eine automatische Erkennungseinheit (6), die konfiguriert ist zum Herausziehen eines Satzes von biometrischen Parametern für jedes Gesicht, das in dem Foto erscheint, und zum Vergleichen des Satzes oder der Sätze von biometrischen Parametern, die aus dem Foto herausgezogen wurden, mit einem biometrischen Bezugsmodell des Benutzers, zu dem die Benutzer-ID gehört, wobei das biometrische Bezugsmodell in der Datenbank (5) gespeichert ist;
wobei die Managementeinheit (4) auch konfiguriert ist zum , wenn das Ergebnis des Vergleichs eine eindeutige Übereinstimmung der Person in dem Foto mit dem Benutzer, zu dem die Benutzer-ID gehört, ergibt, Hinzufügen eines Kennzeichens, das anzeigt, dass keine manuelle Gültigerklärung benötigt wird, zu dem Ergebnis, und zum, wenn das Ergebnis des Vergleichs keine eindeutige Übereinstimmung der Person in dem Foto mit dem Benutzer, zu dem die Benutzer-ID gehört, zeigt, Hinzufügen eines Kennzeichens, das anzeigt, dass eine manuelle Gültigerklärung benötigt wird, zu dem Ergebnis;
- eine manuelle Gültigerklärungseinheit (7) zum Gültigerklären des Fotos in dem Fall, dass der automatische Vergleich nicht in der Lage ist, eine eindeutige Übereinstimmung der Person in dem Foto mit einer berechtigten Person festzustellen.

12. System nach Anspruch 11, bei dem der Berechtigungsserver (3), die Managementeinheit (4), die Datenbank (5), die automatische Erkennungseinheit (6) und die manuelle Erkennungseinheit (7) in der Cloud sind.

13. System nach einem der Ansprüche 11 oder 12, weiterhin aufweisend ein Gesichtstrainingsmodul (8), aufweisend einen automatischen Gesichtserkennungs-Trainingsalgorithmus, und konfiguriert zum Schaffen eines biometrischen Modells von jedem registrierten Benutzer anhand zumindest eines Fotos.

14. System nach Anspruch 13, bei dem das Gesichtstrainingsmodul (8) konfiguriert ist zum Aktualisieren der biometrischen Modelle anhand von mehr kürzlich empfangenen Fotos der Benutzer.

15. Computerprogrammprodukt, aufweisend Computerprogrammbefehle/einen Code für die Durchführung des Verfahrens nach einem der Ansprüche 1 bis 10.

## Revendications

1. Méthode pour vérifier l'identité d'un utilisateur d'un service en ligne, **caractérisé par** les étapes suivantes :
- lorsqu'un terminal d'utilisateur (1) est connecté (A1) à un service en ligne (2) au moyen d'une communication sur un protocole Internet, envoyer (A2) d'un serveur dudit service en ligne (2) audit terminal d'utilisateur (1) une adresse IP d'un serveur d'authentification (3) ;
- connecter (B1) ledit terminal d'utilisateur (1) à ladite adresse IP et télécharger (B2) à partir dudit serveur d'authentification (3) au moins une application (33), ladite au moins une application (33) étant destinée à prendre des photos avec la webcam du terminal d'utilisateur (1) ;
- prendre une photo avec la webcam du terminal d'utilisateur (1), ladite prise de la photo étant contrôlée par ladite application (33) ;
- envoyer (D2) ladite photo et des métadonnées associées à une unité de gestion (4), lesdites métadonnées comprenant au moins un ID utilisateur de l'utilisateur utilisant ledit terminal d'utilisateur (1) et le temps de capture de ladite photo ;
- stocker (E6) ladite photo et des métadonnées associées dans une base de données (5) ;
- au niveau d'un module de reconnaissance faciale automatique (6), extraire automatiquement un ensemble de paramètres biométriques pour chaque visage qui apparaît sur ladite photo ;
- au niveau dudit module de reconnaissance faciale automatique (6), comparer ledit ensemble ou lesdits ensembles de paramètres biométriques extraits de ladite photo avec un modèle biométrique de référence de l'utilisateur auquel appartient ledit ID utilisateur, ledit modèle biométrique de référence étant stocké dans ladite base de données (5) ;
- si le résultat de ladite comparaison met en correspondance sans équivoque la personne sur la photo avec l'utilisateur auquel appartient ledit ID utilisateur, ladite unité de gestion (4) ajoute au résultat un drapeau indiquant qu'aucune validation manuelle n'est nécessaire ;
- sinon, si le résultat de ladite comparaison ne met pas en correspondance sans équivoque la personne sur la photo avec l'utilisateur auquel appartient ledit ID utilisateur, ladite unité de gestion (4) ajoute au résultat un drapeau indiquant qu'une validation manuelle est nécessaire ; ensuite : soit informer le fournisseur de service en ligne (2) de cela, soit envoyer (G1) ladite photo à une unité de reconnaissance manuelle (7) pour une validation manuelle de la photo ;
- répéter l'étape de prise d'une photo avec la webcam du terminal d'utilisateur (1) et les étapes subséquentes, en vérifiant ainsi en continu l'identité de l'utilisateur connecté au service en ligne (2) par l'intermédiaire dudit terminal d'utilisateur (1).

2. Méthode selon la revendication 1, dans laquelle ladite étape de répétition de la prise de photo avec la webcam du terminal d'utilisateur (1) est effectuée aléatoirement.

3. Méthode selon la revendication 1, dans laquelle ladite étape de répétition de la prise de photo avec la webcam du terminal d'utilisateur (1) est effectuée périodiquement.

4. Méthode selon l'une quelconque des revendications précédentes, dans laquelle l'ID utilisateur de l'utilisateur utilisant ledit terminal d'utilisateur (1) qui est envoyé (D2) à une unité de gestion (4) conjointement avec ladite photo, est fourni par le terminal d'utilisateur (1) qui à son tour l'a obtenu (A2) auprès dudit fournisseur de service en ligne.

5. Méthode selon l'une quelconque des revendications précédentes, dans laquelle si l'utilisateur n'a pas encore été enregistré comme un utilisateur dudit service en ligne (2), avant de télécharger à partir dudit serveur d'authentification (3) une application (33) pour prendre des photos avec la webcam du terminal d'utilisateur (1) :
- une application (31) pour l'enregistrement lors d'une session contrôlée de reconnaissance faciale est téléchargée à partir dudit serveur d'authentification (3) vers ledit terminal d'utilisateur (1), ladite application d'enregistrement (31) étant configurée pour prendre au moins une première photo avec la webcam du terminal d'utilisateur (1) ;
- au moins une première photo est prise avec la webcam du terminal d'utilisateur (1), ladite prise de la photo étant contrôlée par ladite application d'enregistrement (31) ;
- ladite au moins une première photo et des métadonnées associées sont envoyées (D1) à l'unité de gestion (4), lesdites métadonnées étant au moins un ID utilisateur de l'utilisateur utilisant ledit terminal d'utilisateur (1) et le temps de capture de ladite au moins une première photo ;
- stocker (E3) ladite au moins une première photo et des métadonnées associées dans ladite base de données (5) ;
- pour ladite au moins une première photo, créer (8) par un algorithme d'apprentissage de reconnaissance faciale automatique un modèle biométrique du visage compris sur ladite photo ;
- stocker (E5) le modèle biométrique créé dans ladite base de données (5), terminer le procédé d'enregistrement.

6. Méthode selon la revendication 5, comprenant en outre l'étape de, une fois qu'une photo a été vérifiée comme appartenant à l'utilisateur qui s'est enregistré initialement au service en ligne (2), création d'un modèle biométrique mis à jour de l'utilisateur enregistré à partir de ladite photo vérifiée et stockage (H4, E13) dudit modèle biométrique mis à jour dans ladite base de données (5).

7. Méthode selon la revendication 5 ou 6, dans laquelle, lors de ladite étape de création (8) par un algorithme d'apprentissage de reconnaissance faciale automatique d'un modèle biométrique du visage compris sur ladite photo, s'il est détecté qu'il y a plus d'un visage sur la photo, l'enregistrement est invalide et la webcam du terminal d'utilisateur (1) est ordonnée de prendre de nouvelles photos jusqu'à ce qu'une photo comprenne un seul visage.

8. Méthode selon l'une quelconque des revendications précédentes, comprenant en outre l'étape de téléchargement (B2) à partir dudit serveur d'authentification (3) d'une application (32) pour définir certaines préférences dans l'interaction entre l'application pour prendre des photos (33) et le terminal d'utilisateur (1).

9. Méthode selon l'une quelconque des revendications précédentes, dans laquelle ladite application (31, 32, 33) téléchargée au niveau dudit terminal d'utilisateur (1) à partir dudit serveur d'authentification (3) est une application portable exécutée au niveau dudit terminal d'utilisateur (1) sans y être installée.

10. Méthode selon l'une quelconque des revendications précédentes, dans laquelle, si ladite photo est envoyée (G1) vers une unité de reconnaissance manuelle (7) pour une validation manuelle de la photo, ladite unité de reconnaissance manuelle (7) fait l'objet d'un accès par un validateur humain à partir d'un terminal distant (9).

11. Système pour vérifier l'identité d'un utilisateur d'un service en ligne, **caractérisé en ce qu'**il comprend :
- un serveur d'authentification (3) configuré pour fournir à un terminal d'utilisateur (1) par l'intermédiaire duquel un utilisateur peut être connecté à un service en ligne (2), au moins une application (33), ladite au moins une application (33) étant une application pour prendre des photos avec une webcam du terminal d'utilisateur (1) ;
- une unité de gestion (4) configurée pour recevoir une photo prise par ladite webcam à la demande de ladite application (33) et des métadonnées associées, lesdites métadonnées comprenant au moins un ID utilisateur de l'utilisateur utilisant ledit terminal d'utilisateur (1) et le temps de capture de ladite photo ;
- une base de données (5) pour stocker ladite photo et des métadonnées associées et une collection de photos et des modèles biométriques correspondants d'utilisateurs enregistrés dudit service en ligne (2) ;
- une unité de reconnaissance automatique (6) configurée pour extraire un ensemble de paramètres biométriques pour chaque visage qui apparaît sur ladite photo et pour comparer ledit ensemble ou lesdits ensembles de paramètres biométriques extraits de ladite photo avec un modèle biométrique de référence de l'utilisateur auquel appartient ledit ID utilisateur, ledit modèle biométrique de référence étant stocké dans ladite base de données (5) ;
dans lequel ladite unité de gestion (4) est également configurée pour, si le résultat de ladite comparaison met en correspondance sans équivoque la personne sur la photo avec l'utilisateur auquel appartient ledit ID utilisateur, ajouter au résultat un drapeau indiquant qu'aucune validation manuelle n'est nécessaire, et pour, si le résultat de ladite comparaison ne met pas en correspondance sans équivoque la personne sur la photo avec l'utilisateur auquel appartient ledit ID utilisateur, ajouter au résultat un drapeau indiquant qu'une validation manuelle est nécessaire ;
- une unité de validation manuelle (7) pour valider la photo dans le cas où la comparaison automatique n'est pas capable de mettre en correspondance sans équivoque la personne sur la photo avec une personne autorisée.

12. Système selon la revendication 11, dans lequel ledit serveur d'authentification (3), ladite unité de gestion (4), ladite base de données (5), ladite unité de reconnaissance automatique (6) et ladite unité de reconnaissance manuelle (7) sont dans le nuage.

13. Système selon la revendication 11 ou 12, comprenant en outre un module d'apprentissage facial (8) comprenant un algorithme d'apprentissage de reconnaissance faciale automatique et configuré pour créer un modèle biométrique de chaque utilisateur enregistré à partir d'au moins une photo.

14. Système selon la revendication 13, dans lequel ledit module d'apprentissage facial (8) est configuré pour mettre à jour les modèles biométriques à partir de photos reçues plus récemment des utilisateurs.

15. Produit de programme informatique comprenant des instructions/code de programme informatique pour exécuter le procédé selon l'une quelconque des revendications 1 à 10.
